(19) Europäisches Patentamt
European Patent Office
Office européen des brevets

(11) EP 2 604 990 A1

(12) EUROPEAN PATENT APPLICATION

(43) Date of publication:
19.06.2013 Bulletin 2013/25

(51) Int Cl.:
G01M 1/36 (2006.01)     G01M 1/32 (2006.01)

(21) Application number: 11193291.9

(22) Date of filing: 13.12.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Snap-on Equipment Srl a unico socio
42015 Correggio (RE) (IT)

(72) Inventors:
• Sotgiu, Paolo
41100 Modena (IT)

• Braghiroli, Francesco
42100 Reggio Emilia (IT)
• Gucciardino, Lillo
41030 Bomporto (IT)
• Ribecco, Emilio
41012 Carpi (Modena) (IT)

(74) Representative: Eisenführ, Speiser & Partner
Postfach 31 02 60
80102 München (DE)

(54) **Method and system for determining and improving running characteristics of a pneumatic tyre of a vehicle wheel**

(57)     A method for determining or improving running characteristics of a vehicle wheel (tyre/rim assembly), comprising supporting the wheel axis of the vehicle wheel with at least a single degree of freedom of vibration perpendicular to the wheel axis. In the interior of the tyre at least one amount of a compensating substance which initiates in its flowing state a compensating effect on the rotating vehicle wheel can be disposed, and the vehicle wheel can be rotated while the compensating substance is brought into the flowing state such that the compensating substance is distributed inside the tyre during the rotation of the vehicle wheel to improve the running characteristics of the vehicle wheel, wherein the running speed of the rotating vehicle wheel is kept in a range different to the natural frequency of the rotating vehicle wheel and its suspension or supporting means.

Fig. 1

## Description

The invention concerns a method and a system for determining and improving running characteristics of a pneumatic tyre or vehicle wheel (rim/tyre assembly).

Methods and machines for measuring uniformities of tyres and imbalances of vehicle wheels and tyres are known from EP 0 897 107 A and US 2009/308156.

WO 98/52009 discloses a method and an apparatus for balancing a vehicle wheel wherein a viscous balancing composition is introduced into the tyre, the wheel is mounted on a rotatable assembly and a rotatable load roller is pressed against the tread surface of the vehicle wheel with a static force. The axes of rotation of the load roller and of the vehicle wheel are assembled essentially parallel. The load roller and the vehicle wheel are rotated for a time period, wherein the force and the time period of rotation are sufficient to cause the balancing composition to be distributed inside the tyre and thereby balancing the vehicle wheel. The load roller is movably supported towards and away from the vehicle wheel when being pressed against the tyre.

EP 2 211 158 A1 discloses a system for automatically balancing a vehicle wheel upon rotation of the wheel about an axis of rotation, wherein the viscous balancing composition is a thixotropic gel disposed within the interior of the tyre and wheel assembly. The system includes a machine for rotating and vibrating the tyre in a plane substantially parallel to an equator plane of the wheel, wherein the wheel rotates at an angular velocity to produce a vibration frequency of the vehicle wheel. The thixotropic gel flows upon the rotation of the wheel such that the wheel is rotationally balanced.

EP 0 281 252 A1 describes a thixotropic balancing composition with a yield stress between 30 Pa and 260 Pa and being able to flow under the influence of vibrations induced when a heavy spot of the tyre hits the road surface.

The prior art discussed above comprises several problems which shall be overcome with the present invention.

The invention provides methods for determining and improving the running characteristics of a pneumatic tyre or vehicle wheel with the features of claims 1 and 2 and a system for determining and improving the running characteristics of a tyre or vehicle wheel with the features of claims 9 and 10.

The method and system for determining the running characteristics of a pneumatic tyre or of a vehicle wheel (tyre/rim assembly) comprises the support of the tyre or of the vehicle wheel in its respective axis with at least a single degree of freedom of vibration in a perpendicular direction with respect to the tyre axis or the wheel axis, rotating the tyre or the vehicle wheel and measuring at least one vibration component along said vibration direction or along a plane parallel to said vibration direction.

For the support of the tyre or of the vehicle wheel, the system comprises a rotatable member on which the tyre or vehicle wheel can be mounted. The rotatable member is supported on a stationary support with at least a single degree of freedom of vibration and measuring means are adapted to measure at least one vibration component along to said vibration direction or along a plane parallel to said vibration direction.

Concerning the improvement of the running characteristics of the tyre or of the vehicle wheel, the invention provides a method with the features of claim 2 and a system with the features of claim 10.

For improving the running characteristics of a tyre or of a vehicle wheel (tyre/rim assembly) the tyre or the vehicle wheel is supported with at least a single degree of freedom of vibration perpendicular to the tyre axis or the wheel axis, disposing in the interior of the tyre at least one amount of a compensating substance which initiates in its flowing state a compensating effect on irregularity or nonuniformity of the rotating vehicle wheel, and rotating the vehicle wheel while the compensating substance is brought into the flowing state such that the compensating substance is distributed inside the tyre during the rotation of the vehicle wheel to improve the running characteristics of the vehicle wheel. The inventive method and the inventive system provide a self-compensating effect and a self-compensating vehicle wheel can be achieved. It is preferred that, the running speed of the rotating vehicle is kept in a range different from the critical frequency of the rotating vehicle wheel and its suspension or supporting means. The running speed of the rotating vehicle wheel can be kept in a range below or above the natural or critical frequency of the rotating vehicle wheel and its suspension or supporting means. Preferably, the running speed of the rotating vehicle wheel can correspond to a circumferential speed of the rotating vehicle wheel in the range of 80 km/h to 120 km/h, more preferably in the range between 90 km/h to 110 km/h and further preferably to 100 km/h. For the at least one amount of a compensating substance a gel substance, especially a thixotropic composition, can be used. In another aspect, the compensating substance can be a composition which can be brought by means of irradiation of energy, for instance by heat radiation or short-wave radiation, into a flowing condition and which returns to a cured or solid state after the irradiation. Moreover, it is possible to use more than one amount of a compensating substance. The compensating substance can alternatively also be composed of small spheres, a powder, and the like. In general, tyres comprising at least one amount of a compensating substance are designed as "self-balancing" or "self-compensating" tyres.

The introduction of the at least one amount of compensating substance can be carried out by disposing the compensating substance in the interior of the tyre, for instance in circumferential areas on the interior tyre surface.

During the rotation of the vehicle wheel, a heavy spot on the wheel creates a force away from the rotation axis. Since the rotation axis of the vehicle wheel is anchored, an opposite force is created on the vehicle wheel, especially on the balancing substance brought during the rotation into its free-flowing state such that the substance is distributed inside the tyre to compensate the heavy spot around the rotation axis. During the rotation in the loaded state, the vehicle wheel may be driven with a circumferential speed of 100 km/h.

It is preferred, that the tyre or the vehicle wheel and the loaded roller are locked in a predetermined distance to each other.

During determining or during improving the running characteristics of the tyre or of the vehicle wheel, loading means can act in a loaded condition or state onto the outer peripheral tyre surface of the rotating tyre or vehicle wheel. The load means can comprise a rotating load roller or a rotating load belt which are pressed in the loaded condition against the tyre periphery.

The vibratory movement of the wheel axis and of the vehicle wheel during the determining run or during the improving run can be guided by appropriate guiding means preferably perpendicular with respect to the roller axis and the wheel axis. The vibratory movement of the wheel axis can be influenced by spring means and damping means acting in the at least single degree of freedom of vibration.

In an advantageous embodiment of the invention, the residual vibrations of the wheel axis can be measured during the rotation of the vehicle wheel in its loaded or unloaded state.

Moreover, it is preferred that the forces acting on the load roller during the rotation of the vehicle wheel in its loaded state are measured.

In the loaded state, the vehicle wheel can be driven in an acceleration phase until a predetermined circumferential speed, for instance 100 km/h is reached. The predetermined circumferential speed can be kept constant during a measuring period from 1 to 5 minutes, preferably from 2 to 3 minutes and more preferably, of about 2,5 minutes during which the flowing compensating substance distributes inside the tyre and a vibration measurement is conducted simultaneously. After this measuring and compensating period, the rotation of the vehicle wheel is decelerated. The deceleration phase starts preferably when the vibration amplitude reaches a minimum.

Additionally, in an unloaded state, the residual unbalance or another residual nonuniformity can be measured. Thereby, a measuring and compensating run can be carried out also in an unloaded state in which the load roller is removed from the tyre surface, wherein the initially measured vibration is proportional to a nonuniformity of the tyre or the wheel which is neutralized by the flowing balancing substance, wherein during the measuring run a compensating action is achieved as well.

Dependent from the measurement results of the determining and improving runs in the loaded and/or unloaded state, especially dependent from the measured residual minimum vibrations, a matching process in which rim and tyre are rotated to one another in known manner, might be performed, when the measured residual vibration and/or the measured residual nonuniformity is out of tolerance.

The performance requirements for the determining and improving runs depend on the type of the vehicle wheel, especially wheel dimensions and wheel weight, for instance as illustrated in the following table:

| Measuring speed (km/h) | 100 |
|---|---|
| Measuring time | 2,5 min. |
| Rim width (inch) | 4 - 13.5 |
| Rim diameter (inch) | 13-24 |
| Overall wheel width (mm) | 350 |
| Overall wheel diameter (mm) | 900 |
| Min. wheel diameter (mm) | 504 |
| Max. wheel weight (kg) | 70 |
| Diameter roller | 318 mm |

The inventive system for determining running characteristics of a tyre or vehicle wheel (rim/tyre assembly) provides a system for improving running characteristics of a vehicle wheel (tyre/rim assembly) which comprises: a rotatable member on which the tyre or vehicle wheel can be mounted. The rotatable member is respectively designed for mounting the tyre or for mounting the vehicle wheel on it. A stationary support is provided for supporting the rotatable member with at least a single degree of freedom of vibration perpendicular to the axis of the rotatable member.

Moreover, a measuring device for measuring vibrations can be operatively connected, especially with force transmission, to the rotatable member. Alternatively, other kinds of measuring devices that do not require force transmission, can also be used. For instance, non-contact vibration measurement systems (e.g. such as laser based vibration and/or velocity measurement systems) can also be used. In a preferred embodiment, the measuring device is configured to measure vibratory accelerations and is preferably designated as accelerometer, particularly a micro-machined accelerometer (MEM). The accelerometer is preferably a surface-micro-machined integrated-circuit accelerometer and consists of two surface micro-machined capacitive sensing cells and a signal conditioning component contained in a single integrated circuit package. Such accelerometers are available on the market, for example Freescale MMA6270.

The accelerometer can be placed such that it does not support the rotatable member or the shaft on which the vehicle wheel is fixed. The accelerometer can be arranged on a vibratory location, for instance a bearing of the rotatable member. Furthermore, the rotatable member can be designed as a shaft equipped with clamping means for mounting the vehicle wheel onto the shaft. It is also possible to mount onto the shaft measuring rims which are balanced and which are free of any runout. The tyre to be determined or to be improved can be mounted on said rims.

In a preferred embodiment of the present invention, the rotatable member can be driven by a motor for rotation about the wheel axis. The rotatable member and the motor can be supported on a common frame which is guided with preferably a single degree of freedom of vibration on the stationary support.

Furthermore, the machine used in the system can include a rotatably mounted load roller designed to be pressed against the outer peripheral tyre surface, especially thread surface of the tyre in a loaded state or condition during the rotation of the tyre or of the vehicle wheel. The machine includes further a locking device adapted to keep the roller axis of the load roller in a stationary position during the rotation of the vehicle wheel in the loaded state. During the rotation of the vehicle wheel, in the loaded state, forces are acting onto the load roller. One or more force measuring means, which can perform preferably static and dynamic force measurement, are operatively connected to the load roller. Especially strain gauges are used. Furthermore, other force measuring sensors, like piezo sensors can be used.

The at least single degree of freedom of vibration is placed within a vibration plane including the roller axis and the axis of the rotatable member which corresponds to the axis of the tyre or to the axis of the vehicle wheel mounted onto the rotatable member. The at least one measuring device is operatively connected to the rotatable member and measures along, i. e. within or parallel, to said single degree of freedom of vibration. The used measuring devices, especially accelerometers can measure monoaxially, biaxially or triaxially. Combinations of such measuring devices can also be used. This redundance can discover vibrations which are not placed in the above explained vibration plane and the system can be adjusted to a condition that the rotatable member and the thereon mounted tyre or vehicle wheel vibrates in the required single degree of freedom of vibration.

Additionally, the at least one force measuring means operatively connected to the load roller has a measuring direction which is placed within the above vibrations plane or parallel to said vibration plane and especially measures along, i. e. within or parallel, to said single degree of freedom of vibration. The force measuring means operatively connected to the load roller can include additionally means for measuring lateral force variations.

It is of advantage that the load roller is driven by means of a linear drive assembly. Thereby, the linear drive assembly includes a motor-driven spindle along which the load roller is moved to press it against the peripheral tyre surface. Moreover, the roller axis can be locked in a stationary position by means of the linear drive. Furthermore, the linear drive can be adapted to provide a predetermined load with which the load roller can be pressed against the peripheral tyre surface. Under this operational condition, the tyre or the vehicle wheel are locked to a predetermined distance therebetween.

In a preferred embodiment of the present invention, spring means and/or damping means acting in the single degree of freedom of the vibration are provided between the stationary support and the rotatable member.

The system parameters can be adjusted according to different requirements. In principle, it is possible that the system parameters are adjusted such that the vibration has the configuration of first harmonic. Alternatively or additionally, the system parameters can be adjusted such that the rotational speed of the vehicle wheel is below or above the natural frequency of the assembly consisting of the vehicle wheel and its bearing means on the stationary machine frame. Furthermore, it is possible to place the at least one measuring means, which is operatively connected to the rotatable member, in predetermined positions along the axis of the rotatable member in order to adjust the machine to different types of tyres or vehicle wheels.

The before described machine can be used in a system for improving running characteristics of a pneumatic tyre or of a vehicle wheel. The inventive system for improving running characteristics of a vehicle wheel (rim/tyre assembly) or of a tyre comprises: a rotatable member on which the vehicle wheel can be mounted, at least one amount of a compensating substance adapted to be disposed in the interior of the tyre and to initiate in its flowing state a compensating effect on the rotating vehicle wheel, a stationary support for supporting the rotatable member with at least a single degree of freedom of vibration. The means for generating the flowing state of the compensating substance may include a radiation source with which the compensating substance is irradiated by a thermal radiation or short-wave radiation to introduce the energy needed to liquefy the compensating substance.

The machine used in the system for improving the running characteristics of the tyre or of the vehicle wheel can include a rotatably mounted load roller designed to be pressed against the outer peripheral tyre surface, especially thread surface of the tyre in a loaded state during the rotation of the vehicle wheel. The machine includes further a locking device adapted to keep the roller axis of the load roller in a stationary position during the rotation of the vehicle wheel in the loaded state. During the rotation of the vehicle wheel, in the loaded state, shearing forces act onto the compensating substance to bring it into a flowing state, especially in the case of a thixotropic substance. Additionally, the before described radiation source can be used. The degree of freedom of vibration of the wheel axis is in a plane including the wheel axis and the roller axis.

Moreover, a measuring device for measuring vibrations can be connected with force transmission (or in a non-contact manner) to the rotatable member, as described before in conjunction with the system for determining the running characteristics of the pneumatic tyre or the vehicle wheel. Furthermore, the rotatable member can be designed as a shaft equipped with clamping means for mounting the vehicle wheel onto the shaft. Further, the rotatable member can be designed in the form of measuring rims which are balanced and which are free of any runout. It is also possible to equip the shaft with measuring rims. The tyre can be mounted on said rims.

In a preferred embodiment of the present invention, the rotatable member can be driven by a motor for rotation about the wheel axis. The rotatable member and the motor can be supported on a common frame which is guided with at least a single degree of freedom of vibration on the stationary support.

Furthermore, it is preferred that the load roller is driven by means of a linear drive assembly in radial direction with respect to the axis of the rotatable member, wherein the linear drive assembly is adapted to provide a predetermined load, wherein the load roller is pressed against the peripheral tyre surface and the linear drive is adapted to be locked on the stationary support in the position where the predetermined load is provided.

Particularly, the rotatable member is driven by an electric motor and wherein the rotatable member and the electric motor are supported on a common frame which is guided with the single degree of freedom of vibration on the stationary support.

It is of advantage that the load roller is driven by means of a linear drive assembly and can be locked in a stationary position by means of the linear drive, as described before.

Further inventive aspects and an embodiment of the present invention will be described in conjunction with the Figures. Thereby the expression "above", "below", "left" and "right" are used in conjunction with an orientation of the Figures such that the reference numbers and the wordings can be read in a regular manner. In detail:

Fig. 1    shows a top view of an on the top open embodiment of the inventive system;

Fig. 2    shows a top view of guiding means for supporting a rotatable member on a stationary support of the embodiment of Figure 1;

Fig. 3    shows schematically a support of the vehicle wheel during rotation according to the invention;

Fig. 4    shows a lateral view of loading means including a load roller which can be used in the embodiment in Figure 1;

Fig. 5    shows a linear drive for the load roller of the embodiment of Figure 4;

Fig. 6    shows a sectional view of a load roller and measuring means which are used in the embodiment of Figures 1 and 4; and

Fig. 7    a cross section through a tyre equipped with a balancing substance.

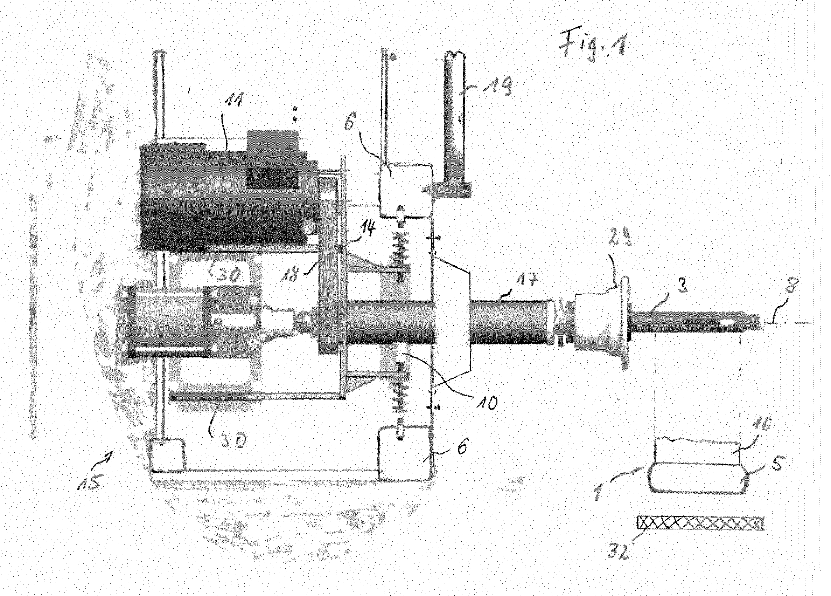

The system for determining and improving the running characteristics of a vehicle wheel 1 or of a pneumatic tyre 5 includes a machine 15 (Fig. 1) in which the vehicle wheel 1 is rotatably supported by means of a rotatable member 3 which is configured as a shaft. The vehicle wheel 1 consisting of a rim 16 and a tyre 5, is mounted onto the rotatable member 3 by clamping means 29 which are well known for example for mounting a vehicle wheel onto the measuring shaft of a wheel balancer. The rotatable member 3 is rotatably supported in a tubular bearing 17 which is fixedly mounted onto a frame 14. The rim 16 may be a part of the vehicle wheel 1 or may be a measuring rim which is balanced and free of any runouts. The measuring rim can be a part of the rotatable member 3 or can be mounted on the rotatable member 3.

The rotatable member 3 is driven by means of a motor 11 which is preferably an electric motor, especially a three-phase motor. The motor torque is transmitted by a belt drive 18 to the rotary member 3. The motor 11 is supported by means of bolts on the frame 14.

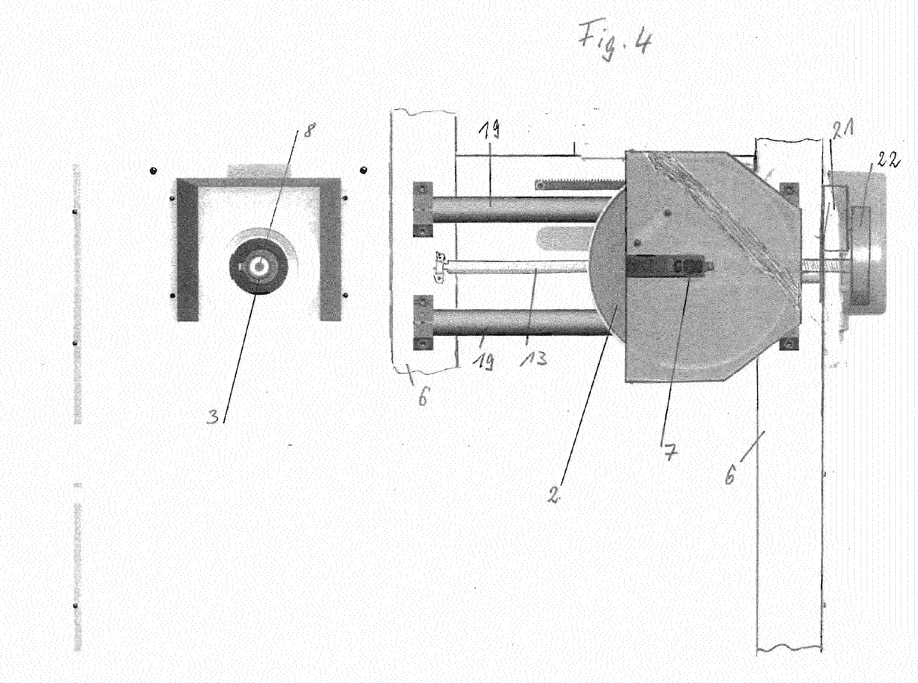

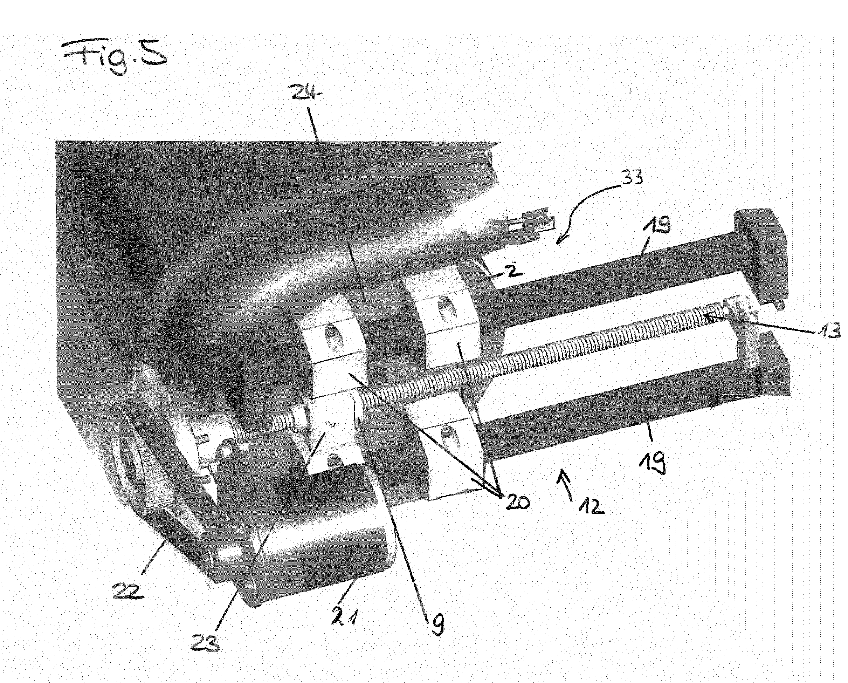

A load roller 2 is rotatably mounted on a linear drive assembly 12 which is supported by the stationary machine frame (Fig. 4 and 5). The load roller 2 and the linear drive assembly 12 establish loading means 33. Instead of the load roller 2, a load belt can be used. The linear drive assembly 12 includes parallel guide bars 19 which are fixedly connected to the stationary machine frame. A roller axle forms a roller axis 7 about which the load roller 2 can rotate. The roller axle is supported in a sliding performance by means of guide pieces 20 on the guide bars 19. The guide pieces 20 are mounted on a support plate 24 with which the roller axle is fixedly connected. The support plate 24 is a part of the supporting frame for the load roller.

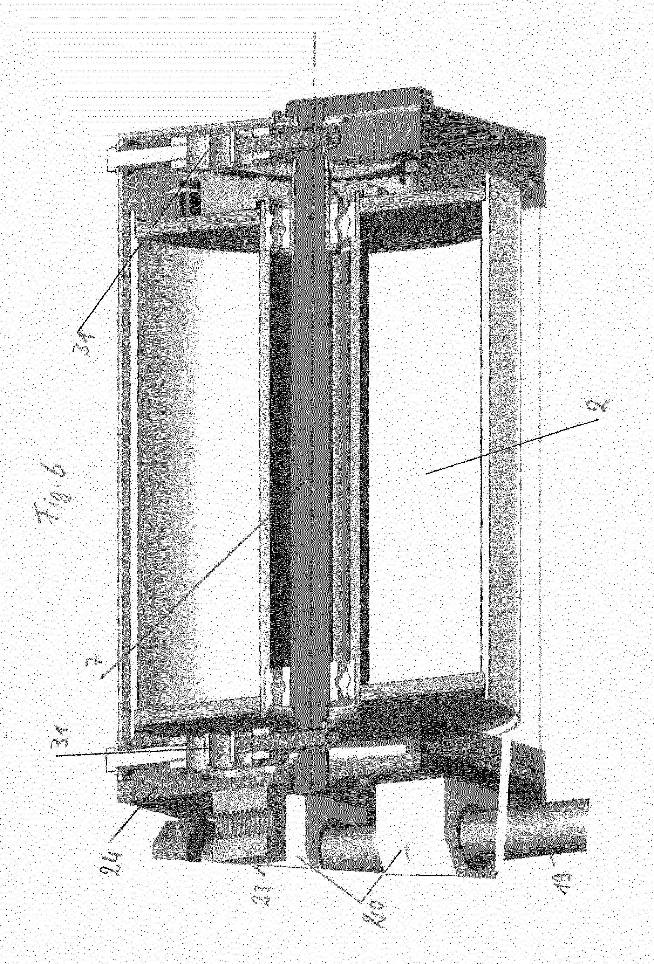

In the embodiment of Fig. 4 and 5, two guide pieces 20 are disposed on each of the both guide bars 19. The guide bars 19 extend in a direction perpendicular to the rotation axis (wheel axis 8) of the rotatable member 3. The roller axis 7 and the wheel axis 8 are substantially parallel to one another. The linear drive assembly 12 includes a threaded spindle 13 which extends parallel to the guide bars 19 and is driven by an electric motor 21, especially a DC-motor. The motor torque is transmitted by means of a belt drive 22 to the spindle 13. A drive piece 23 has an internal thread which engages the thread of the spindle 13. The drive piece 23 is fixedly connected with the support plate 24 (Fig. 6).

The load roller 2 can be moved by the linear drive assembly 12 towards and away from the vehicle wheel 1 which is mounted on the rotatable member 3. By the movement towards the vehicle wheel 1, the load roller 2 can be pressed with a predetermined force against the outer peripheral surface (tread surface) of the tyre 5. The predetermined force may be about 1,000 N.

If the load roller 2 is pressed with the predetermined force against the outer peripheral tyre surface, the roller axis 7 can be locked in a stationary position by a locking device 9. The locking device 9 can be incorporated in the linear drive assembly 12. Preferably, the locking effect is achieved by a self-locking action between the internal thread of the drive piece 23 and the thread of the spindle 13 in the position in which the load roller 2 is pressed against the tyre 5. The locking action may be provided also by a holding force created by the electric motor 21 or by an appropriate mechanic locking member.

In this loaded state, the rotatable member 3 is driven by the motor 11 to rotate the vehicle wheel 1 in a measurement run or an improving run during which the rotatable member 3 and the vehicle wheel 1 can vibrate with a degree of freedom in a plane including the roller axis 7 and the wheel axis 8 which is coaxial with the rotation axis of the rotatable member 3. In the loaded state, the forces acting in the radial, axial and tangential directions between the load roller 2 and the vehicle wheel 1 can be measured preferably at the bearing of the load roller 2 by means of appropriate force sensors 31, for instance strain gauges and/or piezo elements.

To enable a vibratory movement of the vehicle wheel 1 and of the rotatable member 3, the frame 14 is supported for a vibratory movement on the stationary support 6, which can be a part of the stationary machine frame. The vibratory movement has a single degree of freedom which is perpendicular to the rotation axis of the rotatable member 3. If the vehicle wheel 1 is mounted on the rotatable member 3, the wheel axis 8 and the rotation axis of the rotatable member 3 are coaxial to one another. The frame 14 is guided by appropriate guide means 25 which guide the frame 14 and the thereto attached rotatable member 3 such that the vehicle wheel 1 performs the required vibratory movement. The guide means 25 are arranged between the frame 14 and the stationary supports 6 on two diametrical sides of the bearing 17 in which the rotatable member 3 is rotatably supported. The guide means 25 include guide members which provide a linear movement perpendicular to the wheel axis 8 and the load roller axis 7. Additional damping elements 28 and/or spring elements 27, for instance coil springs, attenuate and influence the vibratory movement.

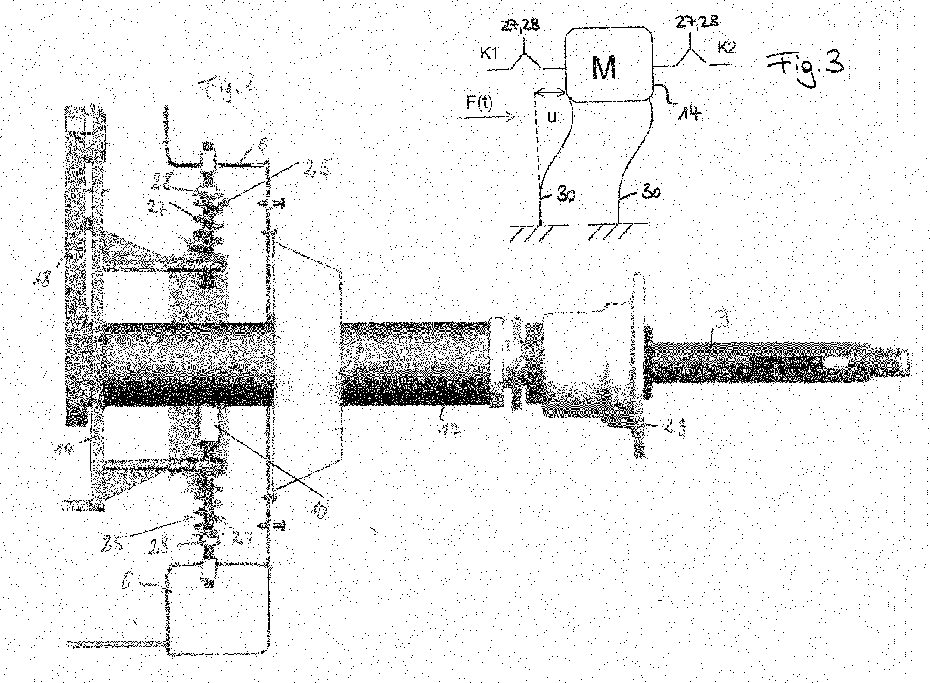

The frame 14 is supported additionally by means of flexible springs 30, for instance plate springs on the stationary machine frame, as illustrated schematically in Fig. 3. The total mass M includes the masses of the frame 14 and of the other components (motor 11, bearing 17, rotatable member 3, vehicle wheel 1) which are for the vibratory movement fixedly connected with the frame 14. The complete bearing means through which the vehicle wheel 1 is supported on the stationary machine frame are adjusted such that the rotational speed of the vehicle wheel 1 in the loaded and unloaded state is kept different from, preferably below the natural frequency of the vehicle wheel and its suspension or supporting means.

The vibration results from non-uniformities of the vehicle wheel, for instance radial runouts of the tyre 5 and of the rim 16, different stiffness values and unequal material distribution in the circumference and other heavy spots. These non-uniformities create vibrations in the single freedom of vibration of the rotary member 3 and/or reaction forces F(t) between the vehicle wheel 1 and the load roller 2 during the rotation in the loaded state (Fig. 3).

The system can include additionally a measuring device 10 for the measurement of the vibrations, especially the vibration acceleration within the single freedom of vibration. In the illustrated embodiment, the measuring device 10 is attached to the bearing 17 for the rotatable member 3 such that a force transmitting contact between the measuring device 10 and the vehicle wheel 1 or the tyre 5 via the rotatable member 3 is achieved. The measuring device 10 can be designed as accelerometer, especially a micro-machined accelerometer (MEM).

The forces acting on the vehicle wheel during the rotation in the loaded state include a dynamic contribution F(t) and a constant contribution C resulting from the predetermined force with which the load roller 2 is pressed against the tyre surface. The relation between the forces F(t) and C and the therefrom created vibratory movement can be described by the equation

$$\frac{F(t)}{M} + \frac{C}{M} = \ddot{u} + (K_1 + K_2)\frac{u}{M} + K\frac{u}{M}$$

wherein $K_1$ and $K_2$ are the contributions of the damping elements 28 and spring elements 27 on both sides of the bearing 17 and K is the contribution of the flexible springs 30, wherein ü is the vibratory acceleration within the vibration amplitude u in the simple degree of vibration.

The applied predetermined force of the load roller 2 can be measured by force sensors 31 provided on the load roller 2. The force sensors 31 are preferably strain gauges.

The load roller 2 can be moved away from the vehicle wheel by means of the linear drive assembly 22 to come into a position in which the load roller 2 is released from the tyre surface in an unloaded state. In the loaded state or condition and in the unloaded state or condition non-uniformities of the tyre 5 or of the vehicle wheel, which influence the running characteristic of the tyre or of the vehicle wheel, can be determined by analyzing the measured vibrations and/or forces acting between the loading means, especially the load roller 2, and the tyre periphery.

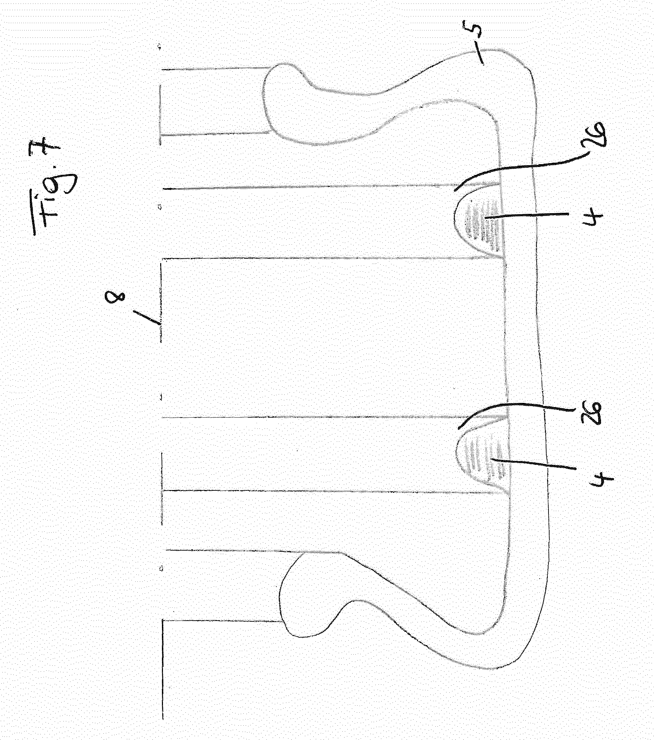

Furthermore, it is possible to improve the running characteristics of the vehicle wheel or tyre by performing a compensating run, wherein during the rotation and vibration of the vehicle wheel, a compensating substance 4, which is disposed in the interior of the tyre 5 (Fig. 7), is able to flow under the influence of the vibrations and distributes inside the tyre during the rotation. Under the influence of a force which is opposite to the reaction force between the load roller 2 and the vehicle wheel 1 with respect to the rotation axis, the compensating substance 4 moves to an equilibrium position in which the reaction force is completely or partially compensated, wherein on the base of the single degree of freedom of the vibration, the system is brought into an arrangement which works in a static mode.

In a preferred embodiment, the compensating substance 4 which may be a thixotropic composition is disposed in ring-shaped areas on the inner surface of the tyre 5 for instance in annular tubes 26 on the inner circumferential side of the tyre 5. Two or more ring-shaped areas for the compensating substance 4 may be provided (Fig. 7).

In another aspect, the compensating substance is a composition which can be brought into a flowably condition by means of an irradiation of energy to the substance. An appropriate radiation source 32 can be arranged on the inner side of a safe guard which covers the vehicle wheel during the rotation. The emitted radiation can be a thermal radiation or an appropriate short-wave or micro-wave radiation. After the irradiation, the compensating substance returns to the solid state. The irradiation of the compensating substance can be performed during the loaded state.

During the rotation of the vehicle wheel 1 in the compensating run, the compensating substance 4 is moved in circumferential direction under the influence of a centrifugal force which results from nonuniformity of the vehicle wheel. The compensating substance is distributed into an angular position on the internal circumferential tyre surface for the compensation of the nonuniformity. The compensating run in the unloaded state can be performed after the run in the loaded state within which the compensating substance is brought into the flowable state. Further, the flowable state of the compensating substance can also be achieved by irradiation of energy.

The compensating run can be performed until the vibrations, especially the amplitudes of the vibrations measured by the measuring device 10 reach a minimum value, or when such vibrations reach a threshold that may be predetermined, chosen by the user, or automatically calculated.

REFERENCE LIST

| | |
|---|---|
| 1 | vehicle wheel (tyre/rim assembly) |
| 2 | load roller |
| 3 | rotatable member (shaft) |
| 4 | balancing substance |
| 5 | tyre |
| 6 | stationary support |
| 7 | roller axis |
| 8 | wheel axis |
| 9 | locking device |
| 10 | measuring device (MEM) |
| 11 | motor (electric motor) |
| 12 | linear drive assembly |
| 13 | threaded spindle |
| 14 | frame |
| 15 | machine |
| 16 | rim |
| 17 | bearing |
| 18 | belt drive |
| 19 | guide bars |
| 20 | guide pieces |
| 21 | electric motor |
| 22 | belt drive |
| 23 | drive piece |
| 24 | support plate |
| 25 | guide means |
| 26 | annular tubes |
| 27 | spring elements |

28    damping elements

29    clamping means

30    flexible springs

31    force sensor

32    radiation source

33    loading means

**Claims**

1. A method for determining running characteristics of a pneumatic tyre or of a vehicle wheel (tyre/rim assembly), comprising:

   - supporting respectively the tyre or the vehicle wheel in its rotation axis with at least a single degree of freedom of vibration in a perpendicular direction with respect to the tyre axis or the wheel axis,
   - rotating the tyre or the vehicle wheel and measuring at least one vibration component along said vibration direction or along a plane parallel to said vibration direction.

2. A method for improving running characteristics of a pneumatic tyre or a vehicle wheel (tyre/rim assembly), comprising:

   - supporting respectively the tyre or the vehicle wheel in its rotation axis with at least a single degree of freedom of vibration perpendicular to the wheel axis,
   - disposing in the interior of the tyre at least one amount of a compensating substance which initiates in its flowing state a compensating effect on the rotating vehicle wheel, and
   - rotating the vehicle wheel while the compensating substance is brought into the flowing state such that the compensating substance is distributed inside the tyre during the rotation of the vehicle wheel to improve the running characteristics of the vehicle wheel.

3. The method according to on of the claims 1 to 2, wherein the tyre or the vehicle wheel is rotated in a loaded condition with a load acting on the periphery of the rotating tyre or of the rotating vehicle wheel.

4. The method according to one of the claims 1 to 3, wherein, in the loaded condition, a load roller is pressed against the outer peripheral tyre surface and the roller axis of the load roller is kept in a stationary position.

5. The method according to one of the claims 1 to 4, wherein the at least single degree of freedom of vibration is placed in a vibration plane including the load roller axis and the tyre axis or the wheel axis or is placed in a plane parallel to said vibration plane.

6. The method according to one of the claims 2 to 5, wherein, in an unloaded state, a residual nonuniformity of the tyre or the vehicle wheel is measured.

7. The method according to one of claims 1 to 6, wherein the vibratory acceleration is measured in the at least single degree of freedom of vibration or parallel thereto.

8. The method according to claim 2, wherein an irradiation of energy is directed onto the compensating substance to bring it into the flowing state.

9. System for determining running characteristics of a pneumatic tyre or a vehicle wheel (tyre/rim assembly) comprising:

   - a rotatable member (3) on which the tyre or the vehicle wheel (1) can be mounted,
   - a stationary support (6) for supporting the rotatable member (3) with at least a single degree of freedom of vibration in a perpendicular direction with respect to the tyre axis or the wheel axis , and
   - measuring means adapted to measure at least one vibration component along said vibration direction or along a plane parallel to said vibration direction.

10. System for improving running characteristics of a pneumatic tyre or a vehicle wheel (tyre/rim assembly) comprising:

   - a rotatable member (3) on which the pneumatic tyre or the vehicle wheel (1) can be mounted,
   - at least one amount of a compensating substance (4) adapted to be disposed in the interior of the tyre (5) and to initiate in its flowing state a compensating effect on nonuniformitiy of the rotating vehicle wheel, and
   - a stationary support (6) for supporting the rotatable member (3) with at least a single degree of freedom of vibration.

11. The system according to one of the claims 9 or 10, wherein at least one measuring device (10) adapted to measure vibratory accelerations in or parallel to the at least single degree of freedom of vibration is operatively connected to the rotatable member (3).

12. The system according to claim 11,

wherein the at least one measuring device (10) is adapted to be placed in predetermined positions along the axis of the rotatable member (3).

13. The system according to one of the claims 9 to 12, wherein loading means (33) adapted to act onto the tyre periphery during the measurement of the vibration are provided.

14. The system according to claim 13, wherein at least one force sensor (31) is operatively connected to the loading means (33) and adapted to perform static and/or dynamic measurement.

15. The system according to one of the claims 9 to 14, wherein the one force sensor (31) is adapted to perform the force measurement within a plane, which includes the tyre axis or wheel axis (8) and a roller axis (7) of a load roller (2), or within a plane parallel to said plane.

Fig. 1

Fig. 2

Fig. 3

Fig. 4

Fig. 5

Fig. 6

EP 2 604 990 A1

Fig. 7

Europäisches
Patentamt

European
Patent Office

Office européen
des brevets

# EUROPEAN SEARCH REPORT

Application Number

EP 11 19 3291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 366 707 A (JARSCHEL RAINER [DE]) 4 January 1983 (1983-01-04)<br><br>* abstract *<br>* figures 1-3 *<br>* column 2, line 20 - column 7, line 31 *<br>----- | 1,3-5,7, 9,11, 13-15 | INV. G01M1/36 G01M1/32 |
| X | EP 1 300 665 A2 (HUNTER ENG CO [US]) 9 April 2003 (2003-04-09)<br>* abstract *<br>* paragraph [0003] - paragraph [0004] *<br>* paragraph [0010] *<br>* paragraph [0014] *<br>* paragraph [0020] - paragraph [0026] *<br>* figures 1,2,4 *<br>----- | 1,3-5,7, 9,11-13 | |
| X,D | EP 2 211 158 A1 (GOODYEAR TIRE & RUBBER [US]) 28 July 2010 (2010-07-28)<br>* abstract *<br>* paragraph [0001] *<br>* paragraph [0010] *<br>* paragraph [0018] - paragraph [0029] *<br>* paragraph [0051] - paragraph [0065] *<br>* figures 2-5 *<br>----- | 1,2,6,9, 10 | |
| X,D | EP 0 897 107 A2 (BUZZI CARLO [IT]) 17 February 1999 (1999-02-17)<br>* abstract *<br>* paragraph [0001] *<br>* paragraph [0008] - paragraph [0017] *<br>* paragraph [0020] - paragraph [0030] *<br>* paragraph [0036] *<br>* figures 1,5 *<br>----- | 1,3-6,9, 13-15 | |

TECHNICAL FIELDS
SEARCHED      (IPC)

G01M

The present search report has been drawn up for all claims

| Place of search | Date of completion of the search | Examiner |
|---|---|---|
| The Hague | 14 May 2012 | Hallbäck, Ann-Sofie |

EPO FORM 1503 03.82 (P04C01)

## ANNEX TO THE EUROPEAN SEARCH REPORT
## ON EUROPEAN PATENT APPLICATION NO.

EP 11 19 3291

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2012

| Patent document cited in search report | | Publication date | Patent family member(s) | | Publication date |
|---|---|---|---|---|---|
| US 4366707 | A | 04-01-1983 | DE | 3010315 A1 | 24-09-1981 |
| | | | JP | 56130633 A | 13-10-1981 |
| | | | US | 4366707 A | 04-01-1983 |
| EP 1300665 | A2 | 09-04-2003 | EP | 1300665 A2 | 09-04-2003 |
| | | | US | 2003061719 A1 | 03-04-2003 |
| EP 2211158 | A1 | 28-07-2010 | EP | 2113401 A2 | 04-11-2009 |
| | | | EP | 2211158 A1 | 28-07-2010 |
| | | | JP | 2009269597 A | 19-11-2009 |
| | | | US | 2009272471 A1 | 05-11-2009 |
| | | | US | 2011260522 A1 | 27-10-2011 |
| EP 0897107 | A2 | 17-02-1999 | DE | 19734904 A1 | 04-03-1999 |
| | | | EP | 0897107 A2 | 17-02-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0897107 A
- US 2009308156 A
- WO 9852009 A
- EP 2211158 A1
- EP 0281252 A1